# EUROPEAN PATENT SPECIFICATION

(11) **EP 4 485 058 B1**
(45) Date of publication and mention of the grant of the patent: **02.12.2026**
(21) Application number: 24178441.2
(22) Date of filing: 28.05.2024
(51) Int. Cl.: G02F 1/1335

(54) **DISPLAY DEVICE**
ANZEIGEVORRICHTUNG
DISPOSITIF D'AFFICHAGE

(30) Priority: 30.06.2023 KR 20230085215
(43) Date of publication of application: 01.01.2025
(60) Divisional application: 26212415.9
(73) Proprietor: LG Electronics Inc., Yeongdeungpo-gu Seoul 07336 (KR)
(72) Inventor: KIM, Seho, 06772 Seoul (KR); PARK, Kuenyoung, 06772 Seoul (KR)
(74) Representative: Vossius & Partner Patentanwälte Rechtsanwälte mbB

(56) References cited:
- WO-A1-2008/023893
- KR-A- 20220 139 269
- US-A1- 2018 233 094
- US-A1- 2023 085 463

## Description

### CROSS-REFERENCE TO RELATED APPLICATION

This application claims the priority benefit of Korean Patent Application No. 10-2023-0085215, filed on June 30, 2023.

### BACKGROUND OF THE INVENTION

### Field of the invention

The present disclosure relates to a display device.

### Description of the Related Art

With the development of information society, there has been a growing demand for various types of display devices. In order to meet such demand, various display devices, such as a liquid crystal display (LCD), a plasma display panel (PDP), an electro luminescent display (ELD), a vacuum fluorescent display (VFD), an organic light emitting diode (OLED), and the like, have been developed and used.

Among them, an LCD panel includes a TFT substrate and a color substrate that are disposed opposite each other with a liquid crystal layer interposed therebetween to thereby display an image using light provided from a backlight unit.

Recently, a lot of research on a structure of a substrate on which a light source such as an LED is mounted has been carried out. In addition, various research has been conducted for improving the picture quality of images displayed by a display panel.

WO 2008/023893 (A1) relates to a light source apparatus and a liquid crystal display having the same.

US 2023/085463 (A1) and KR 10-2022-0139269 (A1) both relate to light-emitting devices and planar light sources.

US 2018/233094 (A1) relates to a video display device including a backlight.

### SUMMARY OF THE INVENTION

It is an objective of the present disclosure to solve the above and other problems.

Another objective of the present disclosure may be to provide a display device having a single sided PCB as a substrate on which light sources are mounted.

Another objective of the present disclosure may be to provide a structure that improves the picture quality by minimizing intrusion in the light coverage of light sources on a substrate by a protruding element on the substrate.

Another objective of the present disclosure may be to provide various examples of the placement of a protruding element between light sources.

Another objective of the present disclosure may be to provide a structure that minimizes a reflective sheet, which covers a substrate, from being lifted by a protruding element on a substrate.

Another objective of the present disclosure may be to provide various examples of a structure for allowing a reflective sheet on a protruding element to be adjacent to a substrate.

In accordance with an aspect of the present disclosure for achieving the above and other objectives, a display device is provided as defined in appended claim 1.

### BRIEF DESCRIPTION OF THE DRAWINGS

The above and other objects, features and advantages of the present disclosure will be more apparent from the following detailed description in conjunction with the accompanying drawings, in which:

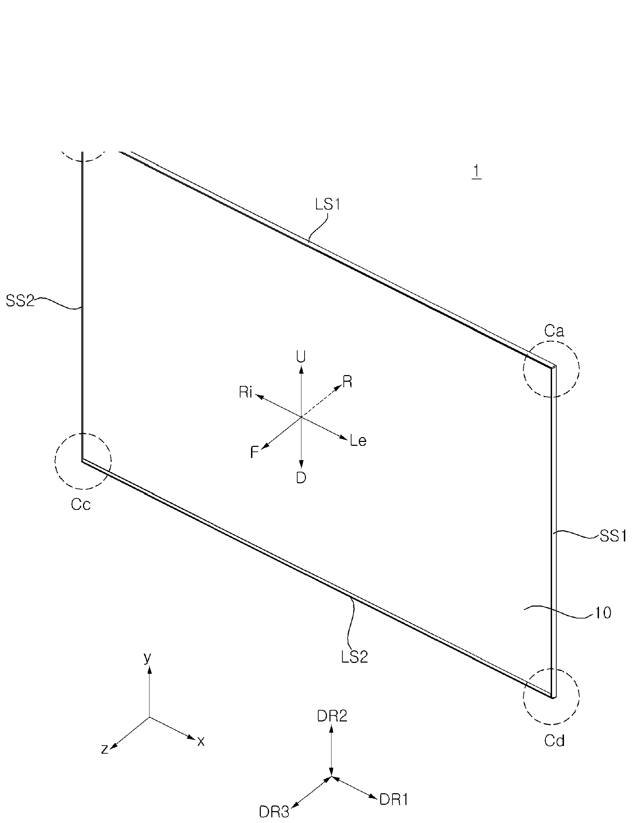

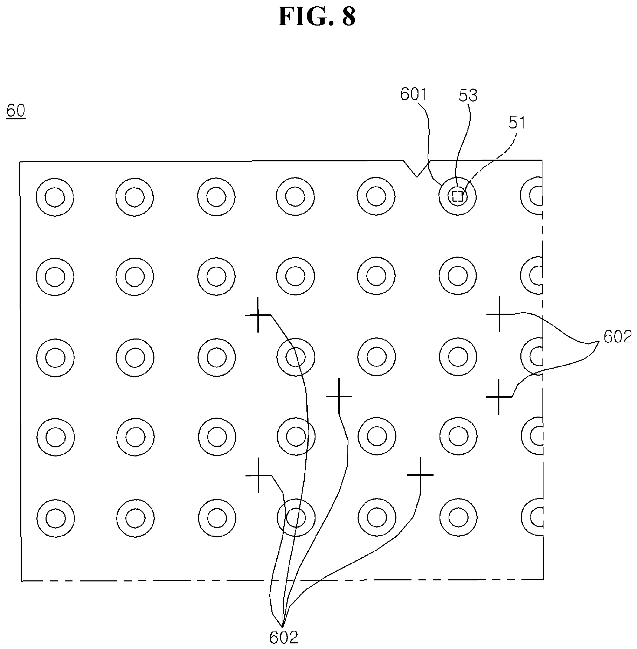

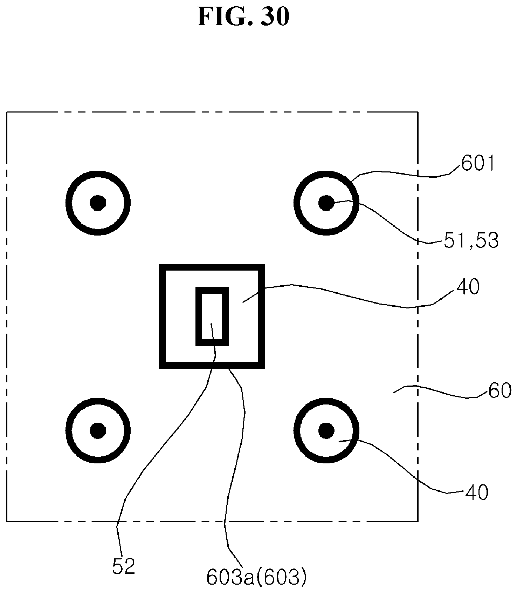

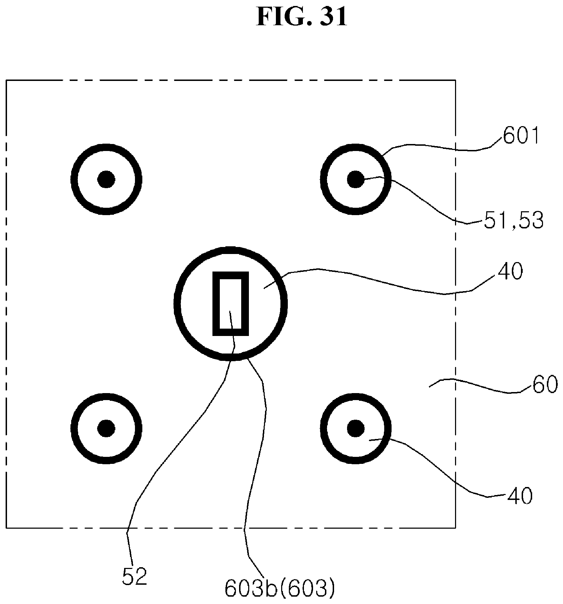

FIGS. 1 to 31 are diagrams illustrating examples of a display device according to embodiments of the present disclosure, wherein the examples given in relation with figures 30 and 31 do not form part of the claimed subject-matter.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand the technical idea of the present disclosure and it should be understood that the idea of the present disclosure is not limited by the accompanying drawings. The idea of the present disclosure should be construed to extend to any alterations, equivalents, and substitutes besides the accompanying drawings.

It will be understood that although the terms "first", "second", etc. may be used herein to describe various elements, these elements should not be limited by these terms. These terms are only used to distinguish one element from another.

It will be understood that when a component is referred to as being "connected to" or "coupled to" another component, it may be directly connected to or coupled to another component, or intervening components may be present. In contrast, when a component is referred to as being "directly connected to" or "directly coupled to" another component, there are no intervening components present.

As used herein, a singular representation is intended to include a plural representation unless the context clearly indicates otherwise.

It will be understood that the terms "comprises" and/or "has," when used in this specification, specify the presence of a stated feature, number, step, operation, component, element, or combination thereof, but do not preclude the presence or addition of one or more other features, numbers, steps, operations, components, elements, or combinations thereof.

The directions "up (U)", "down (D)", "left (Le)", "right (Ri)", "front (F)", and "rear (R)" shown in the drawings are only for the convenience of description, and the technical concept disclosed in the specification is not limited by these directions.

Referring to FIG. 1, a display device 1 may include a display panel 10. The display panel 10 may display an image.

The display device 1 may include a first long side LS1, a second long side LS2 opposite the first long side LS1, a first short side SS1 adjacent to the first long side LS1 and the second long side LS2, and a second short side SS2 opposite the first short side SS1. Meanwhile, for the convenience of explanation, it is illustrated and described that lengths of the first and second long sides LS1 and LS2 are greater than lengths of the first and second short sides SS1 and SS2, but the lengths of the first and second long sides LS1 and LS2 may be substantially equal to the lengths of the first and second short sides SS1 and SS2.

A direction parallel to the long sides LS1 and LS2 of the display device 1 may be referred to as a left-and-right direction or a first direction DR1. The first short side SS1 may be referred to as a left side (Le, x), and the second short side SS2 may be referred to as a right side (Ri).

A direction parallel to the short sides SS1 and SS2 of the display device 1 may be referred to as an up-and-down direction or a second direction DR2. The first long side LS1 may be referred to as an upper or top side (U, y), and the second long side LS2 may be referred to as a lower or bottom side (D).

A direction perpendicular to the long sides LS1 and LS2 and the short sides SS1 and SS2 of the display device 1 may be referred to as a front-and-rear direction or a third direction DR3. A direction in which the display panel 10 displays an image may be referred to as a front (F, z), and a direction opposite to the front may be referred to as a rear (R).

The first long side LS1, the second long side LS2, the first short side SS1, and the second short side SS2 may be referred to as edges of the display device 1. In addition, points where the first long side LS1, the second long side LS2, the first short side SS1, and the second short side SS2 meet each other may be referred to as corners. A point where the first short side SS1 and the first long side LS1 meet may be referred to as a first corner Ca. A point where the first long side LS1 and the second short side SS2 meet may be referred to as a second corner Cb. A point where the second short side SS2 and the second long side LS2 meet may be referred to as a third corner Cc. A point where the second long side LS2 and the first short side SS1 meet may be referred to as a fourth corner Cd.

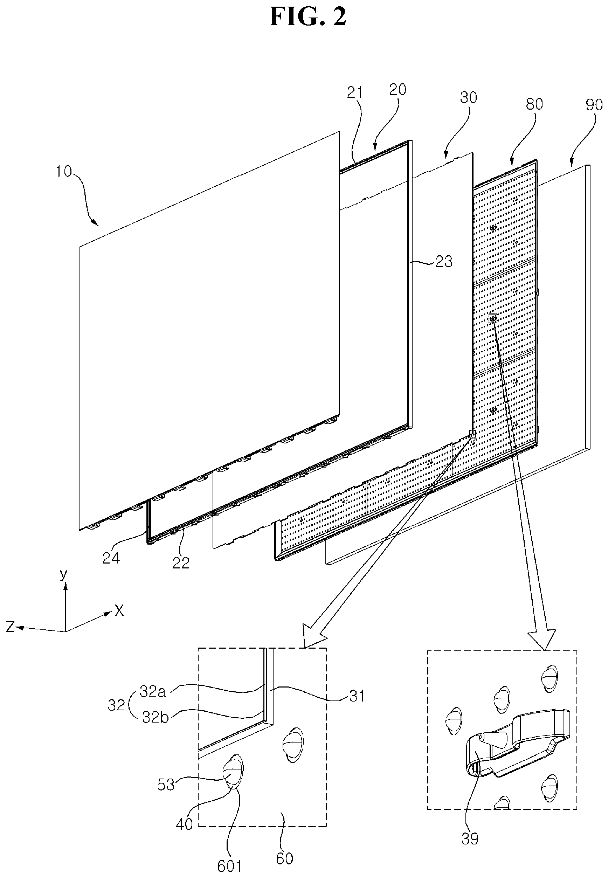

Referring to FIGS. 1 and 2, the display device 1 may include a display panel 10, a side frame 20, a backlight unit, a frame 80, and a back cover 90.

The display panel 10 may define a front surface or side of the display device 1, and may display an image. The display panel 10 may display an image by outputting red, green, or blue (RGB) for each pixel by a plurality of pixels in accordance with timing. The display panel 10 may be divided into an active area in which an image is displayed and a de-active area in which no image is displayed. The display panel 10 may include a front substrate and a rear substrate that are disposed opposite each other with a liquid crystal layer interposed therebetween. The display panel 10 may be referred to as an LCD panel 10.

The front substrate may include a plurality of pixels, each of which consists of red, green, and blue subpixels. The front substrate may output light corresponding to a color of red, green, or blue in response to a control signal.

The rear substrate may include switching elements. The rear substrate may switch a pixel electrode. For example, the pixel electrode may change the molecular arrangement of a liquid crystal layer in response to a control signal input from the outside. The liquid crystal layer may include liquid crystal molecules. The arrangement of liquid crystal molecules may be changed according to a voltage difference generated between the pixel electrode and a common electrode. The liquid crystal layer may transmit light provided from the backlight unit to the front substrate or block the light.

The side frame 20 may extend along an edge of the display panel 10. The side frame 20 may cover the edge of the display panel 10. For example, the side frame 20 may include a plastic or metal material. The side frame 20 may be referred to as a guide panel 20.

The backlight unit may be disposed at the rear of the display panel 10. The backlight unit may be disposed at the front of the frame 80 and may be coupled to the frame 80. The backlight unit may be driven by a full driving scheme or a partial driving scheme such as local dimming, impulsive, etc. The backlight unit may include light sources that provide light to the front, a substrate 40 on which the light sources are mounted, lenses 53 that cover the light sources, a reflective sheet 60 that covers a front surface of the substrate 40, and an optical part 30 that is disposed at the front of the reflective sheet 60. Meanwhile, a reflective material may be coated on the front surface of the substrate 40.

The optical part 30 may be disposed opposite the display panel 10 with respect to the side frame 20. The optical part 30 may allow light of the light source to be uniformly transmitted to the display panel 10. The optical part 30 may include a diffusion plate 31 and an optical sheet 32.

The diffusion plate 31 may be positioned between the reflective sheet 60 and the optical sheet 32. The diffusion plate 31 may allow light of the light source to be diffused. An air gap may be formed between the reflective sheet 60 and the diffusion plate 31. The air gap may serve as a buffer, and may allow light of the light source to spread widely. A supporter 39 may be positioned between the reflective sheet 60 and the diffusion plate 31, may be coupled to the reflective sheet 60, and may support the diffusion plate 31.

The optical sheet 32 may be adjacent to or in contact with a front surface of the diffusion sheet 31. The optical sheet 32 may include at least one sheet. For example, the optical sheet 32 may include a plurality of sheets having different functions, and may be bonded to each other or in close contact with each other. For example, a first optical sheet 32a may be a diffusion sheet, and a second optical sheet 32b may be a prism sheet.

The frame 80 may be disposed at the rear of the backlight unit. The display panel 10, the side frame 20, and the backlight unit may be coupled to the frame 80. The frame 80 may support the components of the display device 10 described above and below. For example, the frame 80 may include a metal material such as an aluminum alloy. The frame 80 may be referred to as a main frame 80, a module cover 80, or a cover bottom 80.

The back cover 90 may cover the rear of the frame 80, and may be coupled to the frame 80. For example, the back cover 90 may be an injection molded product of a resin material. As another example, the back cover 90 may include a metal material.

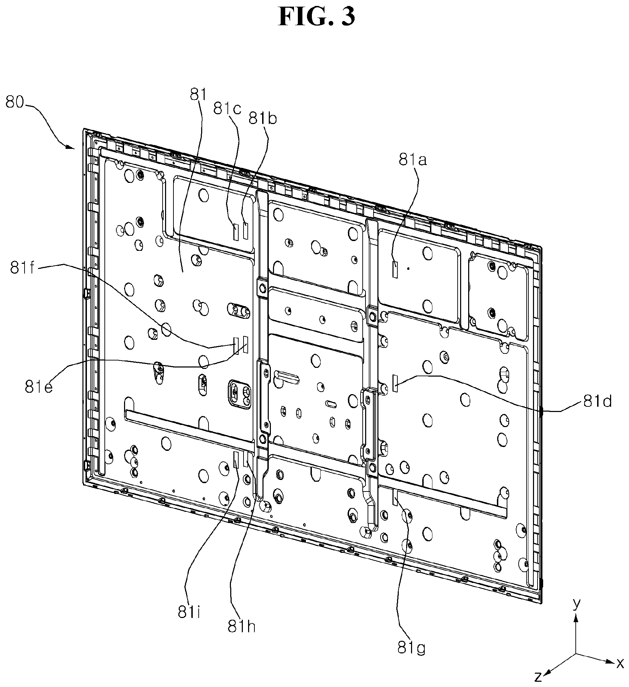

Referring to FIG. 3, a flat portion 81 may define a front surface or side of the frame 80. A plurality of frame holes 81a, 81b, 81c, 81d, 81e, 81f, 81g, 81h, and 81i may be formed in the flat portion 81.

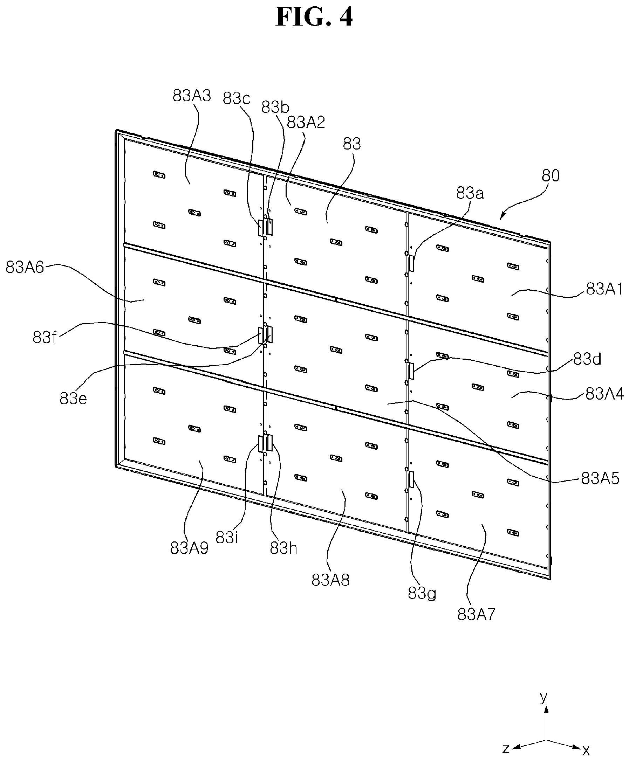

Referring to FIGS. 3 and 4, a heat sink 83 may cover a front surface of the flat portion 81, and may be coupled to the flat portion 81. A plurality of heat sink holes 83a, 83b, 83c, 83d, 83e, 83f, 83g, 83h, and 83i may be formed in the heat sink 83, and may be aligned with the plurality of frame holes 81a, 81b, 81c, 81d, 81e, 81f, 81g, 81h, and 81i. The heat sink 83 may be omitted.

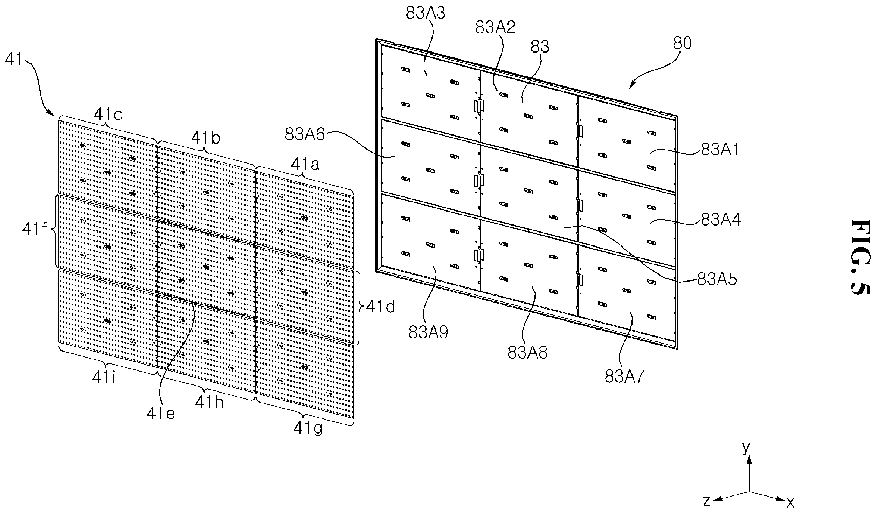

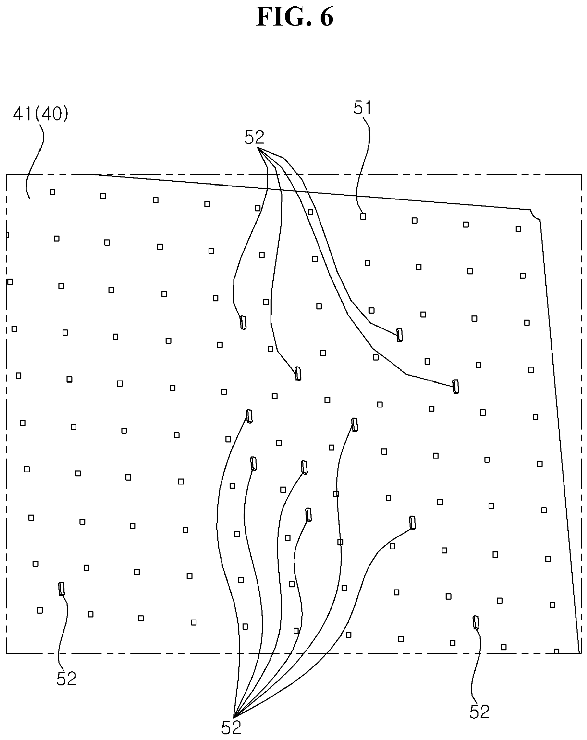

Referring to FIGS. 5 and 6, a substrate 41 may be coupled to the front surface of the frame 80 or the heat sink 83. The substrate 41 may be a printed circuit board (PCB). For example, the substrate 41 may include at least one of polyethylene terephthalate (PET), glass, polycarbonate (PC), or silicon. The substrate 41 may have the shape of a plate. The substrate 41 may be referred to as a substrate 40.

At least one substrate 41 may be provided. A plurality of substrates 41a, 41b, 41c, 41d, 41e, 41f, 41g, 41h, and 41i may respectively cover a plurality of areas (or regions) 83A1, 83A2, 83A3, 83A4, 83A5, 83A6, 83A7, 83A8, and 83A9 of the heat sink 83.

A light source 51 may be mounted on the front surface of the substrate 41. A plurality of light sources 51 may be arranged in a matrix form on the front surface of the substrate 41. The light source 51 may be a light emitting diode (LED) chip or an LED package. The light source 51 may be configured as a colored LED that emits light of at least one of colors such as red, green, and blue, or a white LED. The light source 51 may be a mini-LED. An electrode pattern may be formed on the substrate 41, and may connect an adaptor (connector) and the light source 51. A power supply board may provide power to the light source 51 through the substrate 41. For example, the electrode pattern may be a carbon nanotube electrode pattern.

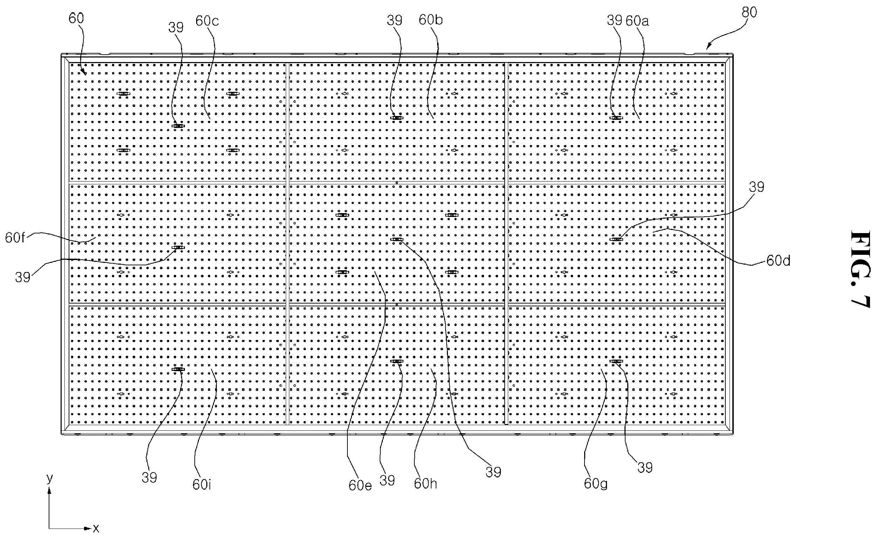

Referring to FIGS. 7 to 9, the substrate 41 may be attached to the front surface of the heat sink 83 by an adhesive member 40AD such as a double-sided tape. Alternatively, an adhesive may be applied to a rear surface of the substrate 41. The reflective sheet 60 may be attached to the front surface of the substrate 41 by an adhesive member 60AD such as a double-sided tape. Alternatively, an adhesive may be applied to a rear surface of the reflective sheet 60. The reflective sheet 60 may reflect light provided by the light source 51 or reflect light reflected from the diffusion plate 31 to the front (see FIG. 2). For example, the reflective sheet 60 may include at least one of aluminum (Al), silver (Ag), gold (Au), or titanium dioxide (TiO2), namely, a metal and/or a metal oxide having high reflectivity. For example, a resin may be deposited on or applied to the reflective sheet 60. At least one reflective sheet 60 may be provided. A plurality of reflective sheets 60a, 60b, 60c, 60d, 60e, 60f, 60g, 60h, and 60i may cover the substrate(s) 41 (see FIG. 5).

A hole 601 may be formed in the reflective sheet 60, and a light source 51 or a lens 53 covering the light source 51 may be disposed in the hole 601. The lens 53 may pass through a hole 60Ada of the adhesive member 60AD and a hole 60a of the reflective sheet 60. The lens 53 may include a silicon material, and may allow a light beam angle to be widened. A diameter of the hole 601 may be greater than a diameter of the lens 53. The number of holes 601 may be the same as the number of light sources 51 or lenses 53.

Meanwhile, the supporter 39 may sequentially pass through a hole 60b of the reflective sheet 60, a hole 60ADb of the adhesive member 60AD, a hole 40s of the substrate 41, and a hole 40ADb of the adhesive member 40AD so as to be detachably coupled to the heat sink 83 and/or the frame 80. A front end of the supporter 39 may support a rear surface of the diffusion plate 31 (see FIG. 2).

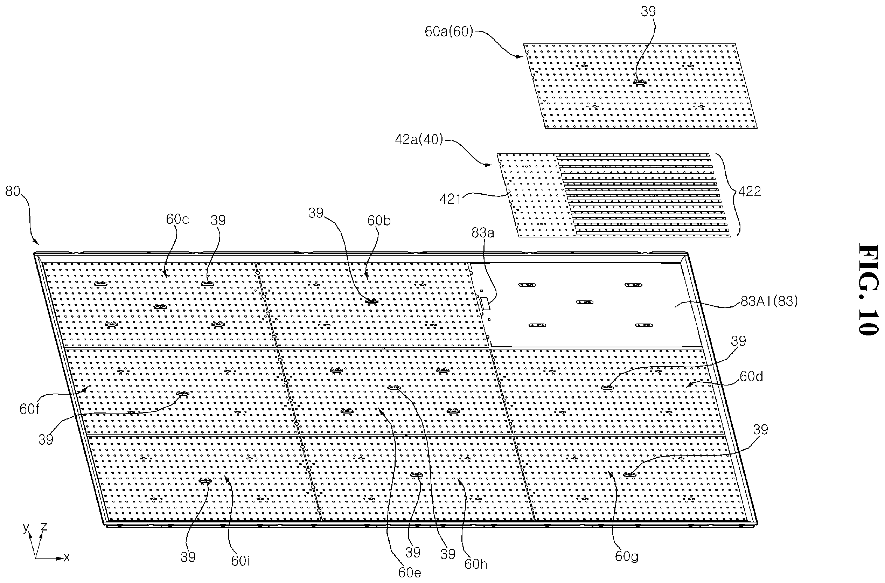

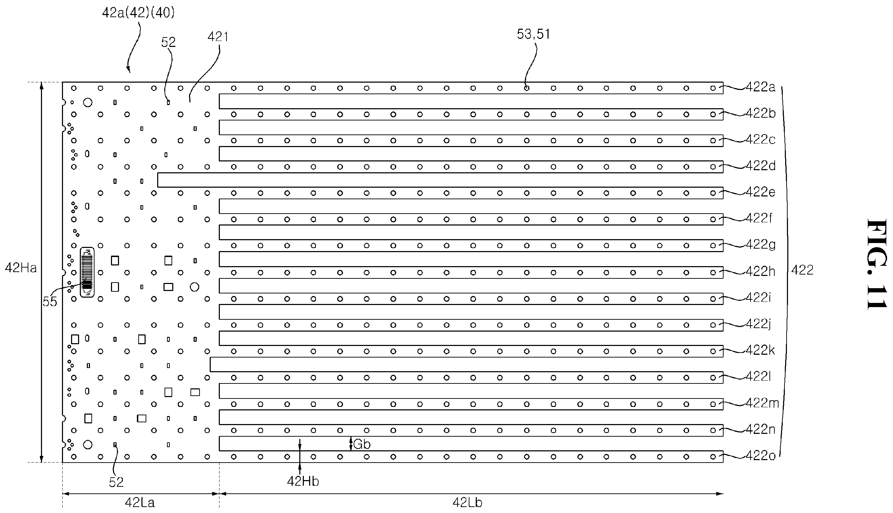

Referring to FIGS. 10 and 11, a substrate 42 may be coupled to the front surface of the frame 80 or the heat sink 83. The substrate 42 may be a printed circuit board (PCB). For example, the substrate 42 may include at least one of polyethylene terephthalate (PET), glass, polycarbonate (PC), or silicon. The substrate 42 may have the shape of a fork. The substrate 42 may be referred to as a substrate 40.

The substrate 42 may include a body 421 and legs 422. The body 421 may be elongated. The legs 422 may extend from one long side of the body 421 in a direction intersecting the body 421. A longitudinal direction of the body 421 may be defined in the vertical direction, and a longitudinal direction of each of the legs 422 may be defined in the horizontal direction. A width 42La of the body 421 may be less than a length 42Ha of the body 421, and may be less than or similar to a length 42Lb of each of the legs 422. The legs 422 may be spaced apart from each other in the longitudinal direction of the body 421. A gap Gb between the legs 422 may be the same as a width 42Hb of the leg 422.

At least one substrate 42 may be provided. A plurality of substrates 42 may be respectively coupled or attached to a plurality of areas (or regions) 83A1, 83A2, 83A3, 83A4, 83A5, 83A6, 83A7, 83A8, and 83A9 (see FIG. 4) of the heat sink 83.

The light source 51 may be mounted on a front surface of the substrate 42. A plurality of light sources 51 may be arranged in a matrix form on front surfaces of the body 421 and the legs 422. The reflective sheet 60 may be coupled or attached to the front surface of the substrate 42, and may have a hole in which the light source 51 or a lens covering the light source 51 is disposed. A plurality of reflective sheets 60a, 60b, 60c, 60d, 60e, 60f, 60g, 60h, and 60i may cover the substrate(s) 42.

Meanwhile, the supporter 39 may sequentially pass through the reflective sheet 60 and the substrate 42 so as to be detachably coupled to the heat sink 83 and/or the frame 80. A front end of the supporter 39 may support a rear surface of the diffusion plate 31 (see FIG. 2).

Referring back to FIG. 6 and FIG. 11, the substrate 40 may be a single sided PCB. The single sided PCB may be referred to as a 1-layer PCB or a single layer PCB. Light sources 51 and diodes 52 may be mounted on the front surface of the substrate 40. The diodes 52 may be disposed between the light sources 51. The diodes 52 may be ESD (electrostatic discharge) protection diodes for preventing electrostatic discharge (ESD). The diodes 52 may be Zener diodes, and may block reverse current. The diode 52 may be referred to as a protruding element 52 or a protruding portion 52.

Meanwhile, a connector, a jumper, a TP point, a pattern for more reliable ESD ground, and the like may be provided on the front surface of the substrate 40, and a screw hole may also be formed in the substrate 40.

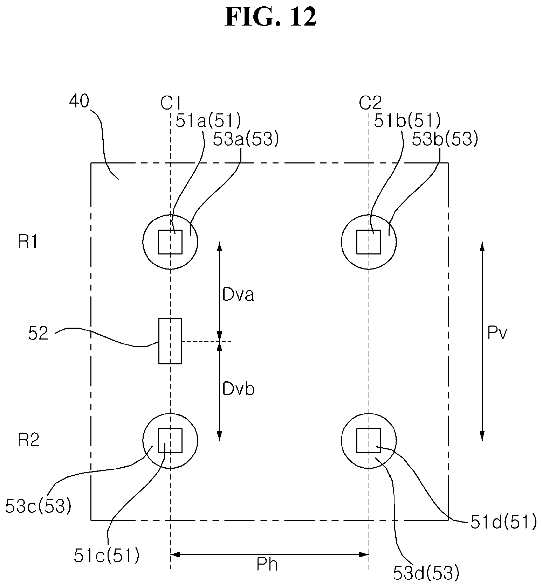

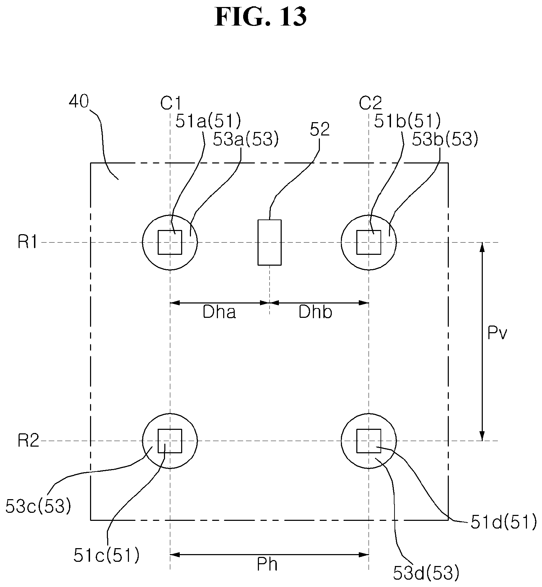

Referring to FIGS. 12 and 13, the light sources 51 may be arranged in a matrix form on the front surface of the substrate 40. The lenses 53 may cover the light sources 51, and may be fixed on the substrate 40. For example, the light source 51 may have a cuboid shape, and the lens 53 may have a dome or hemisphere shape. The lens 53 may include a silicon material, and may allow a light beam angle to be winded.

The light sources 51 may be spaced apart from each other by a predetermined distance Ph in a row direction (i.e., the horizontal direction). The distance Ph may be referred to as a horizontal pitch Ph. The light sources 51 may be spaced apart from each other by a predetermined distance Pv in a column direction (i.e., the vertical direction). The distance Pv may be referred to as a vertical pitch Pv.

For example, a first light source 51a and a second light source 51b may be located on a first row R1, and a third light source 51c and a fourth light source 51d may be located on a second row R2. Here, the first light source 51a and the third light source 51c may be located on a first column C1, and the second light source 51b and the fourth light source 51d may be located on a second column C2.

Referring to FIG. 12, the diode 52 may be positioned between the first row R1 and the second row R2, and may be located on the first column C1. That is, with respect to the first column C1, the diode 52 may be aligned with the first and third light sources 51a and 51c.

In this case, the diode 52 may intrude in a coverage of the first light source 51a and/or a coverage of the third light source 51c. Here, the coverage may be a range (region) of light having a predetermined ratio of the luminance to the surface luminance of the lens covering the light source. A radius of the coverage of the first light source 51a may be greater than a distance from the first light source 51a to a center between the first and third light sources 51a and 51c. A radius of the coverage of the third light source 51c may be greater than a distance from the third light source 51c to the center between the first and third light sources 51a and 51c.

A distance Dva between the diode 52 and the first light source 51a may be equal to a distance Dvb between the diode 52 and the third light source 51c. The diode 52 may intrude in the coverage of each of the first light source 51a and the third light source 51c at the middle between the first light source 51a and the third light source 51c.

Alternatively, unlike FIG. 12, the distance Dva may be less than or greater than the distance Dvb. The diode 52 may be disposed closer to the first light source 51a than the third light source 51c to thereby intrude in the coverage of the first light source 51a, or may be disposed closer to the third light source 51c than the first light source 51a to thereby intrude in the coverage of the third light source 51.

Thus, due to the diode 52, adequate mixing of light of the first light source 51a and light of the third light source 51c may not be achieved. This may cause a portion or region of the display panel corresponding to the diode 52 to be relatively dark or stained.

Referring to FIG. 13, the diode 52 may be positioned between the first column C1 and the second column C2, and may be located on the first row R1. That is, with respect to the first row R1, the diode 52 may be aligned with the first and second light sources 51a and 51b.

In this case, the diode 52 may intrude in a coverage of the first light source 51a and/or a coverage of the second light source 51b. Here, the coverage may be a range (region) of light having a predetermined ratio of the luminance to the surface luminance of the lens covering the light source. A radius of the coverage of the first light source 51a may be greater than a distance from the first light source 51a to a center between the first and second light sources 51a and 51b. A radius of the coverage of the second light source 51b may be greater than a distance from the second light source 51b to the center between the first and second light sources 51a and 51b.

A distance Dha between the diode 52 and the first light source 51a may be equal to a distance Dhb between the diode 52 and the second light source 51b. The diode 52 may intrude in the coverage of each of the first light source 51a and the second light source 51b at the middle between the first light source 51a and the second light source 51b.

Alternatively, unlike FIG. 13, the distance Dha may be less than or greater than the distance Dhb. The diode 52 may be disposed closer to the first light source 51a than the second light source 51b to thereby intrude in the coverage of the first light source 51a, or may be disposed closer to the second light source 51b than the first light source 51a to thereby intrude in the coverage of the second light source 51b.

Thus, due to the diode 52, adequate mixing of light of the first light source 51a and light of the second light source 51b may not be achieved. This may cause a portion or region of the display panel corresponding to the diode 52 to be relatively dark or stained.

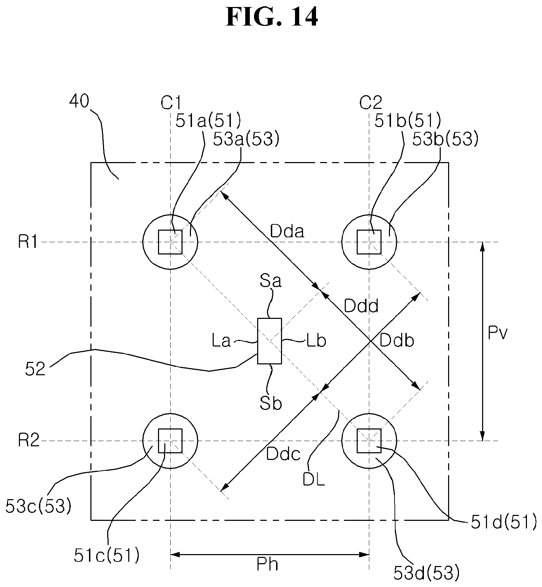

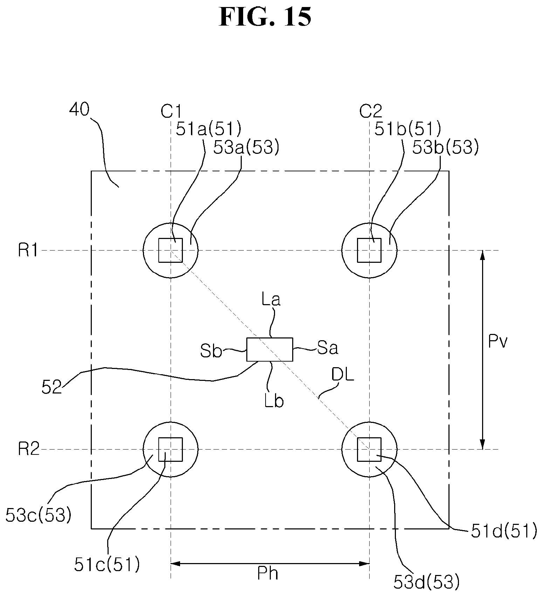

Referring to FIGS. 14 and 15, the diode 52 may be positioned between the first row R1 and the second row R2, and may be positioned between the first column C1 and the second column C2. The diode 52 may be located on an imaginary straight line (i.e., a diagonal line) DL that connects the first light source 51a, which is the first light source of the first row R1 (or nth light source), and the fourth light source 51d, which is the second light source of the second row R2 (or (n+1)th light source). That is, the diode 52 may be disposed obliquely to the first and second rows R1 and R2 and the first and second columns C1 and C2. The diode 52 may be located at a center of the straight line DL, or may be offset from the center of the straight line DL to any one of the first to fourth light sources 51a, 51b, 51c, and 51d.

In this case, the diode 52 may not intrude in coverages of the first to fourth light sources 51a, 51b, 51c, and 51d, or may intrude relatively less in the coverages than those of the examples described above with reference to FIGS. 12 and 13.

A distance Dda between the diode 52 and the first light source 51a may be greater than the distance Dva (see FIG. 12), and a distance Ddc between the diode 52 and the third light source 51c may be greater than the distance Dvb (see FIG. 12). The diode 52 may not intrude in the coverage of each of the first light source 51a and the third light source 51c, or may intrude relatively less in the coverages than that of the example described above with reference to FIG. 12.

The distance Dda between the diode 52 and the first light source 51a may be greater than the distance Dha (see FIG. 13), and a distance Ddb between the diode 52 and the second light source 51b may be greater than the distance Dhb (see FIG. 13). The diode 52 may not intrude in the coverage of each of the first light source 51a and the second light source 51b, or may intrude relatively less in the coverages than that of the example described above with reference to FIG. 13.

For example, the distance Ddb between the diode 52 and the second light source 51b may be equal to the distance Ddc between the diode 52 and the third light source 51c, and a distance Ddd between the diode 52 and the fourth light source 51d may be equal to the distance Dda between the diode 52 and the first light source 51a. The diode 52 may not intrude in the coverage of each of the second light source 51b and the fourth light source 51d, or may intrude relatively less in the coverages.

Thus, adequate mixing of light of the light sources around the diode 52, namely, the first to fourth light sources 51a, 51b, 51c, and 51d, may be achieved. As a result, the formation of a darker or stained portion on a display region corresponding to the diode 52 may be reduced or suppressed.

The light source 51 may have a cross section of a rectangular shape. Referring to FIG. 14, the cross section may have long sides La and Lb that are parallel to the vertical direction and short sides Sa and Sb that are parallel to the horizontal direction. Referring to FIG. 15, the cross section may have long sides La and Lb that are parallel to the horizontal direction and short sides Sa and Sb that are parallel to the vertical direction. Alternatively, the cross section may be inclined in a direction that intersects the horizontal direction and the vertical direction.

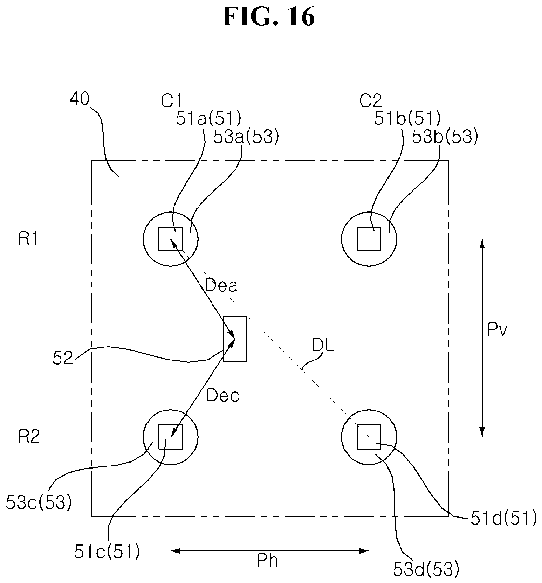

Referring to FIG. 16, the diode 52 may be positioned to be offset from the center of the straight line DL to the first column C1.

A distance Dea between the diode 52 and the first light source 51a may be greater than the distance Dva (see FIG. 12), and a distance Dec between the diode 52 and the third light source 51c may be greater than the distance Dvb (see FIG. 12). In this case, the diode 52 may not intrude in coverages of the first and third light sources 51a and 51c, or may intrude relatively less in the coverages than that of the example described above with reference to FIG. 12.

Alternatively, the diode 52 may be positioned to be offset from the center of the straight line DL to the first row R1. In this case, the diode 52 may not intrude in coverages of the first and second light sources 51a and 51b, or may intrude relatively less in the coverages than that of the example described above with reference to FIG. 13.

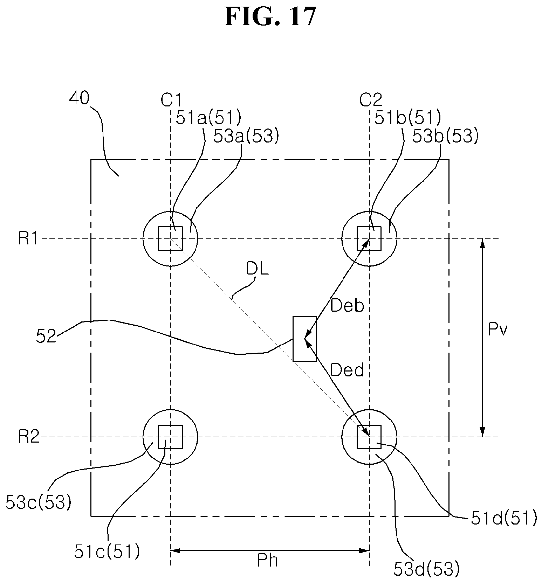

Referring to FIG. 17, the diode 52 may be positioned to be offset from the center of the straight line DL to the second column C2.

A distance Deb between the diode 52 and the second light source 51b may be greater than the distance Dva (see FIG. 12), and a distance Ded between the diode 52 and the fourth light source 51d may be greater than the distance Dvb (see FIG. 12). In this case, the diode 52 may not intrude in coverages of the second and fourth light sources 51b and 51d, or may intrude relatively less in the coverages than that of the example described above with reference to FIG. 12.

Alternatively, the diode 52 may be positioned to be offset from the center of the straight line DL to the second row R2. In this case, the diode 52 may not intrude in coverages of the third and fourth light sources 51c and 51d, or may intrude relatively less in the coverages than that of the example described above with reference to FIG. 13.

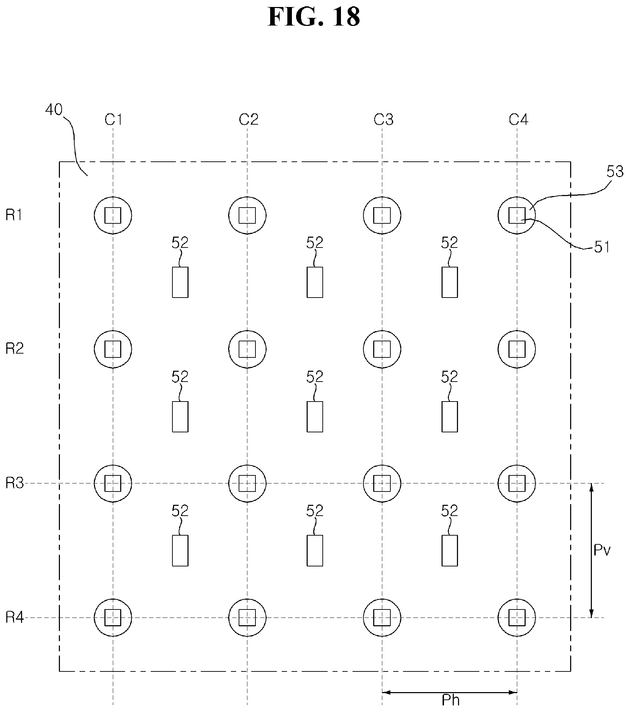

Referring to FIG. 18, a plurality of diodes 52 may be disposed alternately with rows R1, R2, R3, and R4 of light sources 51 while being disposed alternatively with columns C1, C2, C3, and C4 of the light sources 51. That is, a matrix consisting of a plurality of diodes 52 may be diagonally offset (i.e., shifted) from a matrix consisting of a plurality of light sources 51.

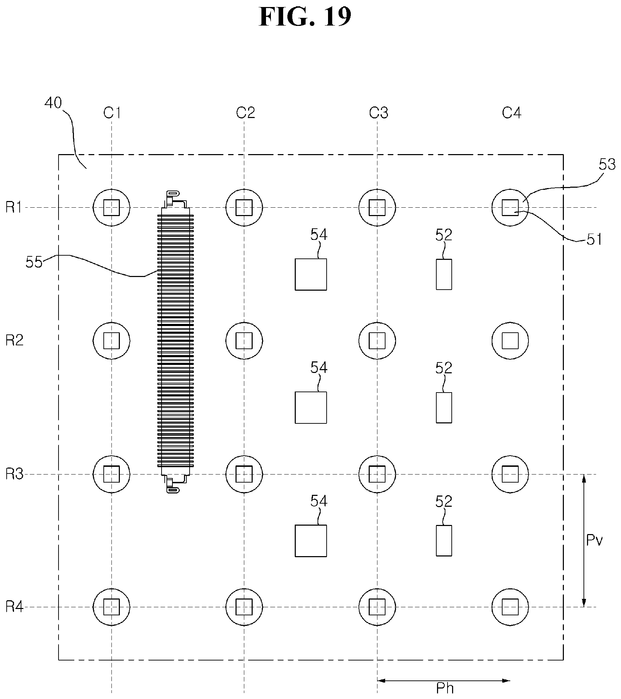

Referring to FIG. 19, a jumper 54 may be mounted on the front surface of the substrate 40. The jumper 54 may connect wires on the substrate 40. Similar to the diode 52, the jumper 54 may be spaced apart from light sources 51, and may be disposed to be offset from rows R1, R2, R3, and R4 and columns C1, C2, C3, and C4 of the light sources 51.

A connector 55 may be mounted on the front surface of the substrate 40. An LED driver (not shown) mounted on the frame 40 (see FIG. 2) may be electrically connected to a power supply board and a main board via a cable, and may provide power and current to the light sources 51 on the substrate 40. The connector 55 may be disposed between the columns (C1, C2, C3, C4) of the light sources 51. The connector 55 may have a length greater than a vertical pitch Pv between the light sources 51. For example, the length of the connector 55 may be approximately twice the vertical pitch Pv. The connector 55 may have a width less than a horizontal pitch Ph between the light sources 51.

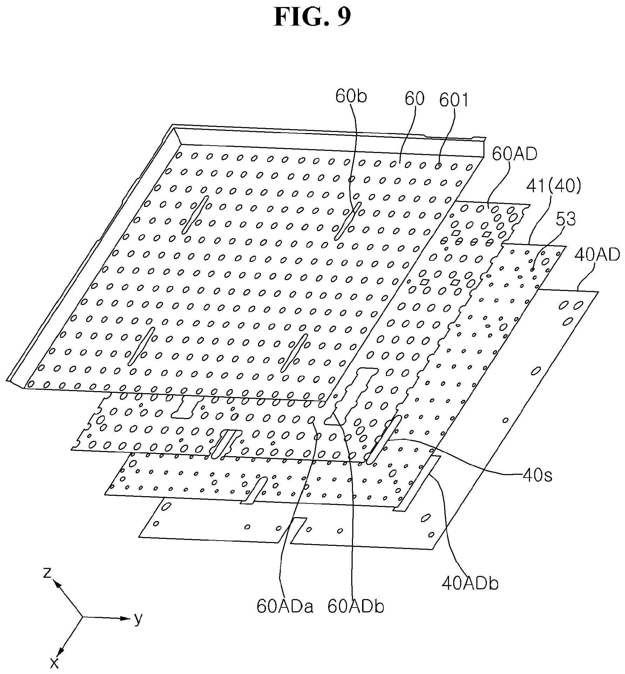

A height of the diode 52 protruding forward from the front surface of the substrate 40 may be greater than a height of the jumper 54 protruding forward from the front surface of the substrate 40. The height of the diode 52 protruding forward from the front surface of the substrate 40 may be greater than a height of the connector 55 protruding forward from the front surface of the substrate 40. In order to minimize the reflective sheet 60 (see FIGS. 9 and 10) that covers the substrate 40 from being lifted around the connector 55, which occupies a relatively large area on the substrate 40, the diode 52 may be disposed outside the the periphery of the connector 55. At least two columns (or at least two rows) of the light sources 51 may be located between the connector 55 and the diode 52. For example, the connector 55 may be located between the first column C1 and the second column C2, and the diode(s) 52 may be located between the third column C3 and the fourth column C4. In addition, the jumper(s) 54 may be located between the second column C2 and the third column C3.

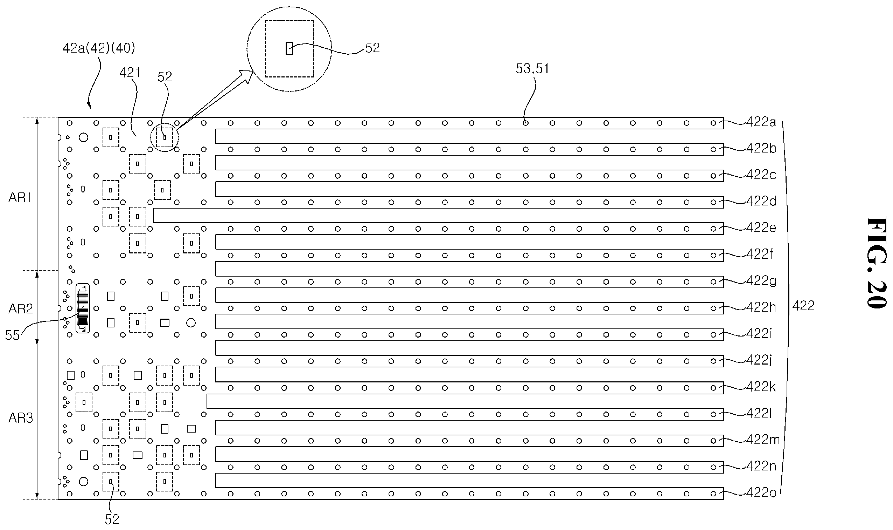

Referring to FIG. 20, the density of diodes 52 may vary depending on the position (or area) of the substrate 40. The density of diodes 52 around the connector 55 may be relatively low. For examples, the diodes 52 may be positioned on the body 421 of the substrate 42, and the body 421 may include a first area AR1, a second area AR2, and a third area AR3. The connector 55 may be positioned on the second area AR2, and the diodes 52 may be clustered in the first area AR1 and the third area AR3. The second area AR2 may be a central area of the body 421.

Accordingly, the reflective sheet 60 that covers the substrate 40 (see FIGS. 9 and 10) may be minimized from being lifted by the diode 52 around the connector 55, which occupies a relatively large area of the substrate 40. Meanwhile, the jumpers 54 with a lower protruding height relative to the diode 52 may be positioned on the second area AR2 on which the connector 55 is located.

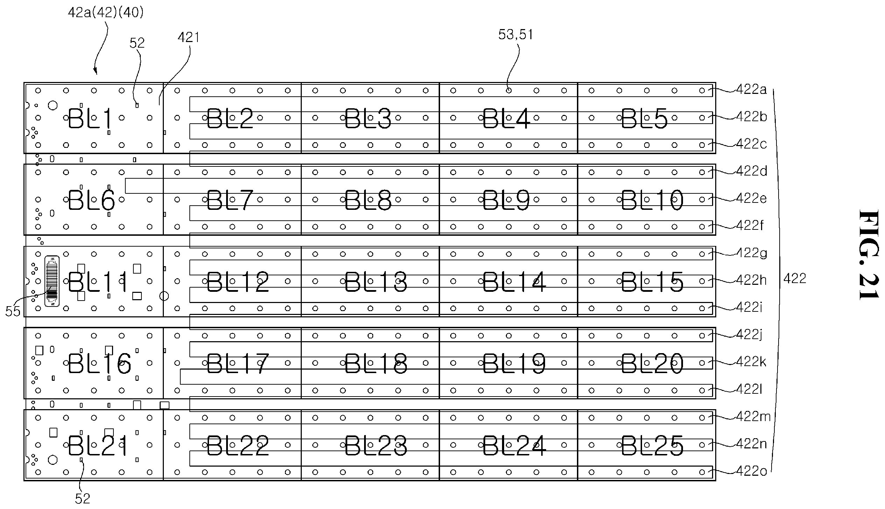

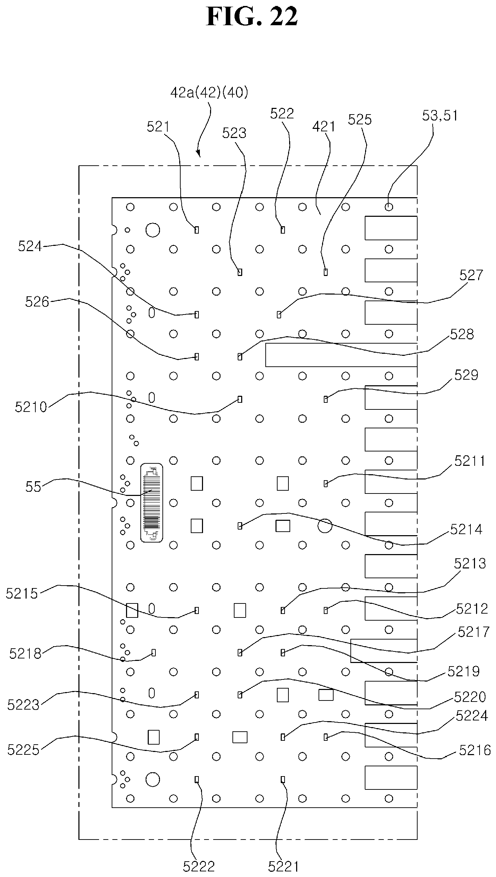

Referring to FIGS. 21 and 22, the light sources 51 on the substrate 40 may be grouped into a plurality of local dimming blocks BLs. One side (or a first side) of each of the plurality of diodes 52 may be electrically connected to a power line of each of the plurality of local dimming blocks, and the other side (or a second side) of each of the plurality of diodes 52 may be electrically connected to a feedback line of each of the plurality of local dimming blocks. Power may be supplied to the local dimming block from the connector 55 via the power line, and a current that has passed through the local dimming block may flow to an LED driver (not shown) via the feedback line and the connector 55. The LED driver may control the brightness of the light sources 51 belonging to the local dimming block by regulating the amount of current flowing through the local dimming block or blocking the flow of current, thereby achieving local dimming.

The diodes 52 may be provided in a number corresponding to the number of local dimming blocks BLs. First to 25th diodes 521, 522, 523, 524, 525, 526, 527, 528, 529, 5210, 5211, 5212, 5213, 5214, 5215, 5216, 5217, 5218, 5219, 5220, 5221, 5222, 5223, 5224, and 5225 may be respectively electrically connected to 1st to 25th local dimming blocks BL1, BL2, BL3, BL4, BL5, BL6, BL7, BL8, BL9, BL10, BL11, BL12, BL13, BL14, BL15, BL16, BL17, BL18, BL19, BL20, BL21, BL22, BL23, BL24, and BL25.

The plurality of local dimming blocks BLs may be sequentially arranged from top to bottom or bottom to top. Thus, a circuit pattern design may be facilitated, and the number of jumpers may be reduced.

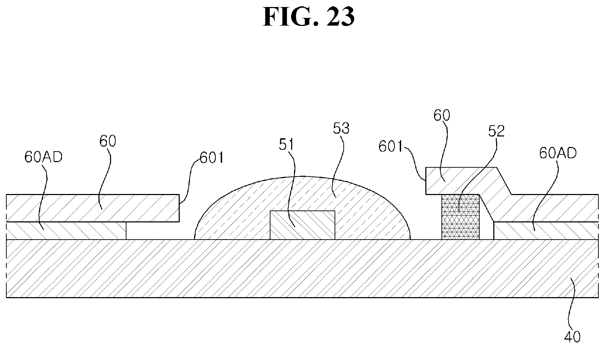

Referring to FIG. 23, the reflective sheet 60 may be attached to the front surface of the substrate 40 by an adhesive member 60AD such as a double-sided tape, and may cover the substrate 40 by avoiding the light source 51 and the lens 53. The lens 53 may be disposed in the hole 601 of the reflective sheet 60. The reflective sheet 60 may cover the diode 52 that is fixed on the front surface of the substrate 40. A portion of the reflective sheet 60 that covers the diode 52 may protrude forward relative to the other or remaining portion of the reflective sheet 60.

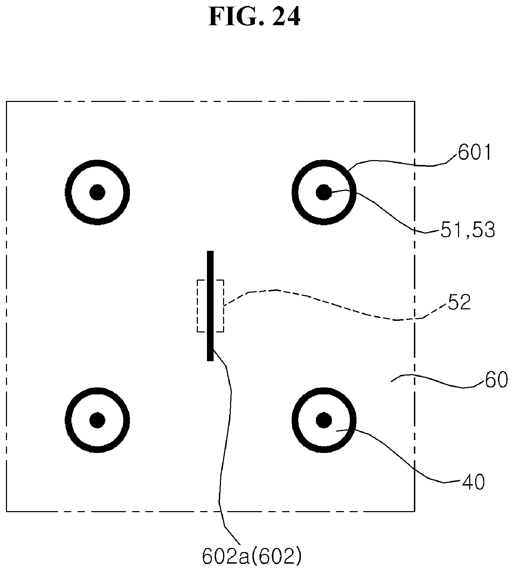

Referring to FIG. 24, a cut line 602a is formed in a portion of the reflective sheet 50 that covers the diode 52. The cut line 602a may be elongated in a longitudinal direction of the diode 52. The cut line 602a may be parallel to a longitudinal axis of the diode 52, and a length of the cut line 602a may be greater than a length of the diode 52. The diode 52 may have a cross section of a vertically long rectangular shape, and the cut line 602a may be referred to as a vertical cut line 602a.

Accordingly, the cut line 602a may be spread apart by the diode 52, and thus, the portion of the reflective sheet 60 that covers the diode 52 may be moved closer to the substrate 40. That is, a distance between the portion of the reflective sheet 60 covering the diode 52 and the diffusion plate 31 (see FIG. 2) may become close or similar to a distance between the remaining portion of the reflective sheet 60 and the diffusion plate 31, thereby improving the light uniformity. In addition, as the reflective sheet 60 becomes adjacent to the substrate 40, the separation of the reflective sheet 60 from the substrate 40 may be suppressed.

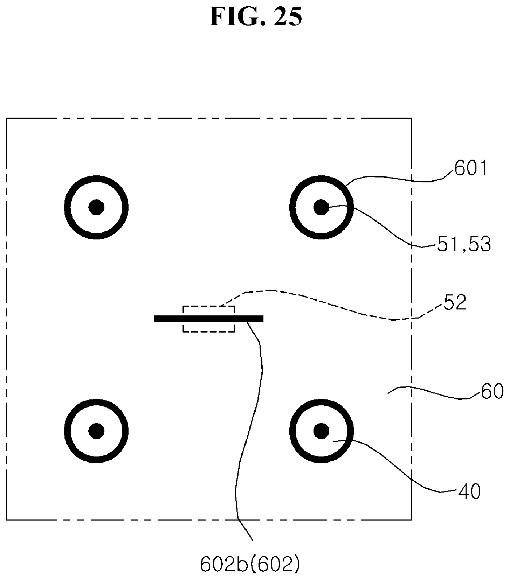

Referring to FIG. 25, a cut line 602b is formed in a portion of the reflective sheet 60 that covers the diode 52. The cutting line 602b may be elongated in a longitudinal direction of the diode 52. The cut line 602b may be parallel to a longitudinal axis of the diode 52, and a length of the cut line 602b may be greater than a length of the diode 52. The diode 52 may have a cross section of a horizontally long rectangular shape, and the cut line 602b may be referred to as a horizontal cut line 602b.

Accordingly, the cut line 602b may be spread apart by the diode 52, and thus, the portion of the reflective sheet 60 that covers the diode 52 may be moved closer to the substrate 40. That is, a distance between the portion of the reflective sheet 60 covering the diode 52 and the diffusion plate 31 (see FIG. 2) may become close or similar to a distance between the remaining portion of the reflective sheet 60 and the diffusion plate 31, thereby improving the light uniformity. In addition, as the reflective sheet 60 becomes adjacent to the substrate 40, the separation of the reflective sheet 60 from the substrate 40 may be suppressed.

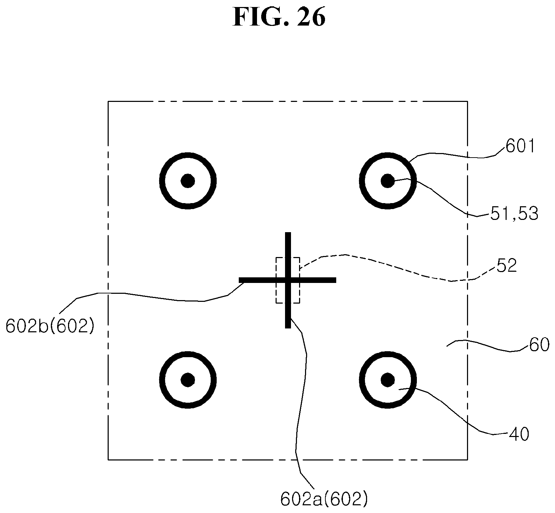

Referring to FIG. 26, a cut line 602c is formed in a portion of the reflective sheet 60 that covers the diode 52. The cut line 602c may have a "+" shape. The cut line 602c may include a cut line 602a and a cut line 602b. The cut line 602a may be referred to as a first part of the cut line 602c, and the cut line 602b may be referred to as a second part of the cut line 602c. When the diode 52 has a cross section of a vertically long rectangular shape, a length of the first part 602a may be greater than a length of the cross section, and a length of the second part 602b may be greater than a width of the cross section. When the diode 52 has a cross section of a horizontally long rectangular shape, a length of the second part 602b may be greater than a length of the cross section, and a length of the first part 602a may be greater than a width of the cross section.

Accordingly, the cut line 602c may be easily spread apart by the diode 52, and thus, the portion of the reflective sheet 60 that covers the diode 52 may be moved more closer to the substrate 40. That is, a distance between the portion of the reflective sheet 60 covering the diode 52 and the diffusion plate 31 (see FIG. 2) may become closer or more similar to a distance between the remaining portion of the reflective sheet 60 and the diffusion plate 31, thereby further improving the light uniformity. In addition, as the reflective sheet 60 becomes more adjacent to the substrate 40, the separation of the reflective sheet 60 from the substrate 40 may be further suppressed.

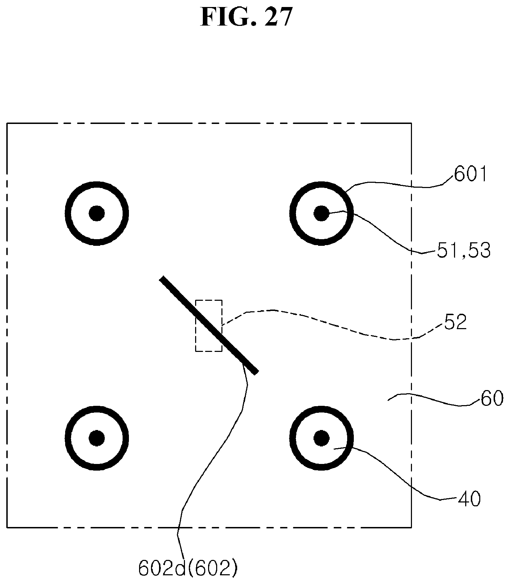

Referring to FIG. 27, a cut line 602d is formed in a portion of the reflective sheet 60 that covers the diode 52.
The cut line 602d may be elongated in a direction inclined from a longitudinal axis of the diode 52 to a first direction. A length of the cut line 602d may be greater than a length of the diode 52. The diode 52 may have a cross section of a vertically or horizontally long rectangular shape, and the cut line 602d may be referred to as a first diagonal cut line 602d.

Accordingly, the cut line 602d may be spread apart by the diode 52, and thus, the portion of the reflective sheet 60 that covers the diode 52 may be moved closer to the substrate 40. That is, a distance between the portion of the reflective sheet 60 covering the diode 52 and the diffusion plate 31 (see FIG. 2) may become close or similar to a distance between the remining portion of the reflective sheet 60 and the diffusion plate 31, thereby improving the light uniformity. In addition, as the reflective sheet 60 becomes adjacent to the substrate 40, the separation of the reflective sheet 60 from the substrate 40 may be suppressed.

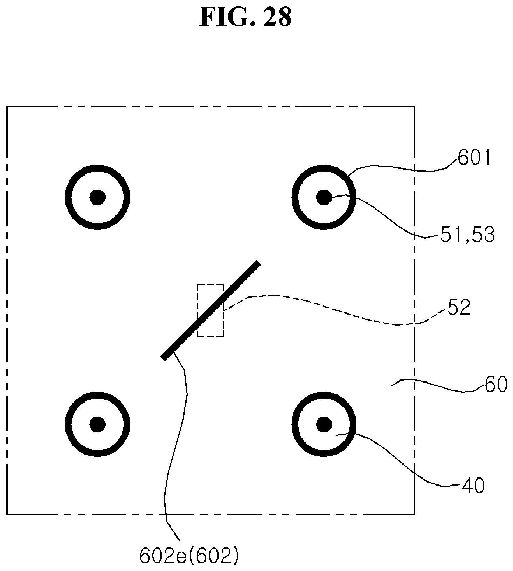

Referring to FIG. 28, a cut line 602e is formed in a portion of the reflective sheet 60 that covers the diode 52.
The cut line 602e may be elongated in a direction inclined from a longitudinal axis of the diode 52 to a second direction. A length of the cut line 602e may be greater than a length of the diode 52. The diode 52 may have a cross section of a vertically or horizontally long rectangular shape, and the cut line 602e may be referred to as a second diagonal cut line 602e.

Accordingly, the cut line 602e may be spread apart by the diode 52, and thus, the portion of the reflective sheet 60 that covers the diode 52 may be moved closer to the substrate 40. That is, a distance between the portion of the reflective sheet 60 covering the diode 52 and the diffusion plate 31 (see FIG. 2) may become close or similar to a distance between the remaining portion of the reflective sheet 60 and the diffusion plate 31, thereby improving the light uniformity. In addition, as the reflective sheet 60 becomes adjacent to the substrate 40, the separation of the reflective sheet 60 from the substrate 40 may be suppressed.

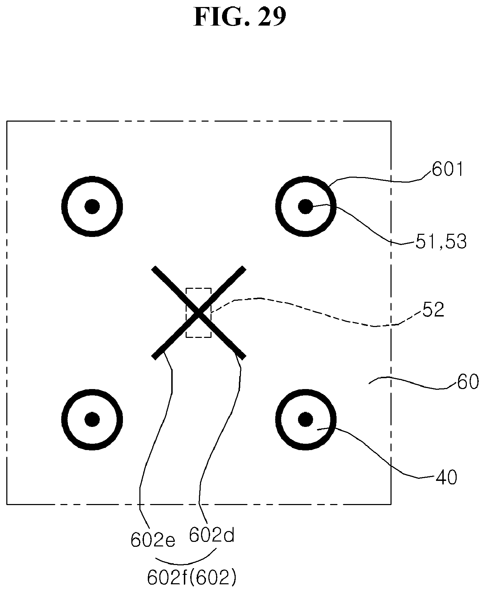

Referring to FIG. 29, a cut line 602f is formed in a portion of the reflective sheet 60 that covers the diode 52.
The cut line 602f may have an "x" shape. The cut line 602f may include a cut line 602d and a cut line 602e. The cut line 602d may be referred to as a first part 602d of the cut line 602f, and the cut line 602e may be referred to as a second part 602e of the cut line 602f. The diode 52 may have a cross section of a vertically or horizontally long rectangular shape, and the first and second parts 602d and 602e may have a length greater than a length of the diode 52.

Accordingly, the cut line 602f may be easily spread apart by the diode 52, and thus, the portion of the reflective sheet 60 that covers the reflective sheet 60 may be moved more closer to the substrate 40. That is, a distance between the portion of the reflective sheet 60 covering the diode 52 and the diffusion plate 31 (see FIG. 2) may be closer or more similar to a distance between the remining portion of the reflective sheet 60 and the diffusion plate 31, thereby further improving the light uniformity. In addition, as the reflective sheet 60 becomes more adjacent to the substrate 40, the separation of the reflective sheet 60 from the substrate 40 may be further suppressed.

Referring to FIG. 30, a through-hole 603a may be formed in a portion of the reflective sheet 60 that faces the diode 52. The through-hole 603a may have a polygonal shape such as a square or triangle. The diode 52 may be disposed in the through-hole 603a, and may be exposed to the front. Here, the through-hole 603a may have a size greater than the diode 52, or may have a size less than or equal to the diode 52.

A front surface of the diode 52 (or front and side surfaces of the diode 52) may be coated with a reflective material (e.g., a white material). Meanwhile, the front surface of the substrate 40 may also be coated with a reflective material (e.g., a white material). The reflective material coated on the diode 52 and the substrate 40 may have a reflectance similar to that of the reflective sheet 60.

Accordingly, a portion of the reflective sheet 60 around the diode 52 may come into close contact with the substrate 40, and thus, the portion of the reflective sheet 60 around the diode 52 and the diffusion plate 31 (FIG. 2) may be the same as a distance between the reaming portion of the reflective sheet 60 and the diffusion plate 31, allowing the light uniformity to be greatly improved. In addition, a decrease in light reflectance (i.e., the formation of dark portions or regions), caused by the diode 52, between the reflection sheet 60 and the diffusion plate 31 may be minimized. Further, as the reflective sheet 60 is in close contact with the substrate 40, the separation of the reflective sheet 60 from the substrate 40 may be suppressed.

Referring to FIG. 31, a through-hole 603b may be formed in a portion of the reflective sheet 60 that faces the diode 52. The through-hole 603b may have the shape of a circle or an oval. The diode 52 may be disposed in the through-hole 603b, and may be exposed to the front. Here, the through-hole 603b may have a size greater than the diode 52, or may have a size less than or equal to the diode 52.

A front surface of the diode 52 (or front and side surfaces of the diode 52) may be coated with a reflective material (e.g., a white material). Meanwhile, the front surface of the substrate 40 may also be coated with a reflective material (e.g., a white material). The reflective material coated on the diode 52 and the substrate 40 may have a reflectance similar to that of the reflective sheet 60.

Accordingly, a portion of the reflective sheet 60 around the diode 52 may come into close contact with the substrate 40, and thus, the portion of the reflective sheet 60 around the diode 52 and the diffusion plate 31 (FIG. 2) may be the same as a distance between the remaining portion of the reflective sheet 60 and the diffusion plate 31, allowing the light uniformity to be greatly improved. In addition, a decrease in light reflectance (i.e., the formation of dark portions or regions), caused by the diode 52, between the reflection sheet 60 and the diffusion plate 31 may be minimized. Further, as the reflective sheet 60 is in close contact with the substrate 40, the separation of the reflective sheet 60 from the substrate 40 may be suppressed.

Referring back to FIGS. 24 to 31, the cut line 602 and the through-hole 603 may be positioned to correspond to the diode 52. That is, similar to the diode 52, the cut line 602 and the through-hole 603 may be disposed obliquely to the rows and columns of the light sources 51. Here, a distance between a boundary of the cut line 602 or the through-hole 603 and a boundary of the hole 601 may be relatively large. Accordingly, even when the cut line 602 and the through-hole 603 are spread apart by the diode 52, the reflective sheet 60 may not be torn or ripped.

By contrast, when a diode, a cut line, and a through-hole are arranged side by side with the rows or columns of the light sources 51, a distance between a boundary of the cut line or the through-hole and a boundary of the hole 601 may be relatively small. When these cut line and the through-hole are spread apart by the diode, the reflective sheet 60 may be torn or ripped.

Referring to FIGS. 1 to 31, a display device according to an aspect of the present disclosure may include: a display panel; a frame positioned behind the display panel; a substrate positioned between the display panel and the frame, and coupled to the frame; a plurality of light sources arranged on a front surface of the substrate; and a protruding element positioned on the front surface of the substrate, and protruding from the front surface of the substrate toward the display panel. The protruding element may be positioned alternately to rows and columns of the light sources.

The substrate may be a single sided PCB.

The protruding element may be a Zener diode.

The plurality of light sources may include: a first light source positioned in a first column of a first row, a second light source positioned in a second column of the first row, a third light source positioned in the first column of a second row, and a fourth light source positioned in the second column of the second row. The protruding element may be positioned on or adjacent to a straight line that connects the first light source and the fourth light source.

The protruding element may be located at a center of the straight line.

A distance between the first light source and the protruding element may be greater than a distance from the first light source to a center between the first light source and the third light source.

The protruding element may include a plurality of protruding elements that are alternatively positioned with the rows of the light sources while being alternatively positioned with the columns of the light sources.

The display device may further include: a reflective sheet covering the front surface of the substrate and including holes at which the light sources are positioned; and a connector positioned on the front surface of the substrate, disposed between the light sources, and covered by the reflective sheet.

With respect to the front surface of the substrate, a protruding height of the protruding element may be greater than a protruding height of the connector. At least two columns of the light sources may be positioned between the connector and the protruding element.

With respect to the front surface of the substrate, a protruding height of the protruding element may be greater than a protruding height of the connector. The protruding element may include a plurality of protruding elements. The substrate may include: a first area; and a second area at which the connector is positioned. A density of the protruding elements may be relatively higher in the first area than in the second area.

The plurality of light sources may be grouped into a plurality of local dimming blocks. The protruding element may include a plurality of diodes provided in a number corresponding to a number of the plurality of local dimming blocks, and electrically connected to the plurality of local dimming blocks. The plurality of local dimming blocks may be sequentially arranged from top to bottom or bottom to top of the substrate.

The display device may further include a reflective sheet covering the front surface of the substrate and the protruding element, and including a plurality of holes in which the plurality of light sources are positioned. The reflective sheet may include a cut line formed in a portion of the reflective sheet that covers the protruding element.

The protruding element may have a cross section of a rectangular shape. The cut line may include a first part which is parallel to a longitudinal axis of the protruding element and which has a length greater than a length of the protruding element.

The cut line may include a second part which intersects the longitudinal axis of the protruding element and which has a length greater than a width of the protruding element.

The display device may further include a reflective sheet covering the front surface of the substrate and including a plurality of holes in which the plurality of light sources are disposed. The protruding element may pass through the reflective sheet and have a front surface coated with a reflective material.

A display device according to the present disclosure has the following effects.

According to at least one of the embodiments of the present disclosure, it is possible to provide a display device having a single sided PCB as a substrate on which light sources are mounted.

According to at least one of the embodiments of the present disclosure, it is possible to provide a structure that improves the picture quality by minimizing intrusion in the light coverage of light sources on a substrate by a protruding element on the substrate.

According to at least one of the embodiments of the present disclosure, it is possible to provide various examples of the placement of a protruding element between light sources.

According to at least one of the embodiments of the present disclosure, it is possible to provide a structure that minimizes a reflective sheet, which covers a substrate, from being lifted by a protruding element on a substrate.

According to at least one of the embodiments of the present disclosure, it is possible to provide various examples of a structure for allowing a reflective sheet on a protruding element to be adjacent to a substrate.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and/or the drawings, and a configuration "B" described in another embodiment of the disclosure and/or the drawings may be combined with each other. Namely, although the combination between the configurations is not directly described, the combination is possible except in the case where it is described that the combination is impossible.

The above detailed description is to be construed in all aspects as illustrative and not restrictive. The scope of the disclosure should be determined by reasonable interpretation of the appended claims.

## Claims

1. A display device (1) comprising:
a display panel (10);
a frame (80) positioned behind the display panel (10);
a substrate (40) positioned between the display panel (10) and the frame (80), and coupled to the frame (80);
a plurality of light sources (51) arranged on a front surface of the substrate (40);
a protruding element (52) positioned on the front surface of the substrate (40), and protruding from the front surface of the substrate (40) toward the display panel (10), and
a reflective sheet (60) covering the front surface of the substrate (40) and the protruding element (52), and including a plurality of holes (601) in which the plurality of light sources (51) are positioned,
wherein the protruding element (52) is positioned alternately to rows and columns of the light sources (51),
**characterised in that**
the reflective sheet (60) comprises a cut line (602) formed in a portion of the reflective sheet (60) that covers the protruding element (52).

2. The display device (1) of claim 1, wherein the substrate (40) is a single sided PCB.

3. The display device (1) of claim 1 or 2, wherein the protruding element (52) is a Zener diode.

4. The display device (1) of any one of claims 1 to 3, wherein the plurality of light sources (51) comprises:
a first light source (51a) positioned in a first column (C1) of a first row (R1);
a second light source (51b) positioned in a second column (C2) of the first row (R1);
a third light source (51c) positioned in the first column (C1) of a second row (R2); and
a fourth light source (51d) positioned in the second column (C2) of the second row (R2), and
wherein the protruding element (52) is positioned on or adjacent to a straight line (DL) that connects the first light source (51a) and the fourth light source (51d).

5. The display device (1) of claim 4, wherein the protruding element (52) is located at a center of the straight line (DL).

6. The display device (1) of claim 4, wherein a distance between the first light source (51a) and the protruding element (52) is greater than a distance from the first light source (51a) to a center between the first light source (51a) and the third light source (51d).

7. The display device (1) of any one of claims 1 to 6, wherein the protruding element (52) comprises a plurality of protruding elements (52) that are alternatively positioned with the rows of the light sources (51) while being alternatively positioned with the columns of the light sources (51).

8. The display device (1) of any one of claims 1 to 7, further comprising:
a reflective sheet (60) covering the front surface of the substrate (40) and including holes (601) at which the light sources (51) are positioned; and
a connector (55) positioned on the front surface of the substrate (40), disposed between the light sources (51), and covered by the reflective sheet (60).

9. The display device (1) of claim 8, wherein, with respect to the front surface of the substrate (40), a protruding height of the protruding element (52) is greater than a protruding height of the connector (55), and
wherein at least two columns of the light sources are positioned between the connector (55) and the protruding element (52).

10. The display device (1) of claim 8 or 9, wherein, with respect to the front surface of the substrate (40), a protruding height of the protruding element (52) is greater than a protruding height of the connector (55),
wherein the protruding element (52) comprises a plurality of protruding elements (52),
wherein the substrate (40) comprises:
a first area (AR1); and
a second area (AR2) at which the connector (55) is positioned, and
wherein a density of the protruding elements (52) is relatively higher in the first area (AR1) than in the second area (AR2).

11. The display device (1) of any one of claims 1 to 10, wherein the protruding element (52) has a cross section of a rectangular shape, and
wherein the cut line (602) comprises a first part (602a) which is parallel to a longitudinal axis of the protruding element (52) and which has a length greater than a length of the protruding element (52).

12. The display device (1) of any one of claims 1 to 11, wherein the cut line (602) comprises a second part (602b) which intersects the longitudinal axis of the protruding element (52) and which has a length greater than a width of the protruding element (52).

## Patentansprüche

1. Anzeigevorrichtung (1), umfassend:
ein Anzeigepaneel (10);
einen Rahmen (80), der hinter dem Anzeigepaneel (10) positioniert ist;
ein Substrat (40), das zwischen dem Anzeigepaneel (10) und dem Rahmen (80) positioniert und mit dem Rahmen (80) gekoppelt ist;
eine Vielzahl von Lichtquellen (51), die auf einer Vorderfläche des Substrats (40) angeordnet sind;
ein vorstehendes Element (52), das auf der Vorderfläche des Substrats (40) positioniert ist und von der Vorderfläche des Substrats (40) in Richtung des Anzeigepaneels (10) vorsteht, und
eine reflektierende Folie (60), die die Vorderfläche des Substrats (40) und das vorstehende Element (52) bedeckt und eine Vielzahl von Löchern (601) aufweist, in denen die Vielzahl von Lichtquellen (51) positioniert ist,
wobei das vorstehende Element (52) abwechselnd mit Reihen und Spalten der Lichtquellen (51) positioniert ist,
**dadurch gekennzeichnet, dass** die reflektierende Folie (60) eine Schnittlinie (602) umfasst, die in einem Abschnitt der reflektierenden Folie (60) ausgebildet ist, der das vorstehende Element (52) bedeckt.

2. Anzeigevorrichtung (1) nach Anspruch 1, wobei das Substrat (40) eine einseitige Leiterplatte ist.

3. Anzeigevorrichtung (1) nach Anspruch 1 oder 2, wobei das vorstehende Element (52) eine Zenerdiode ist.

4. Anzeigevorrichtung (1) nach einem der Ansprüche 1 bis 3, wobei die Vielzahl von Lichtquellen (51) umfasst:
eine erste Lichtquelle (51a), die in einer ersten Spalte (C1) einer ersten Reihe (R1) positioniert ist;
eine zweite Lichtquelle (51b), die in einer zweiten Spalte (C2) der ersten Reihe (R1) positioniert ist;
eine dritte Lichtquelle (51c), die in der ersten Spalte (C1) einer zweiten Reihe (R2) positioniert ist; und
eine vierte Lichtquelle (51d), die in der zweiten Spalte (C2) der zweiten Reihe (R2) positioniert ist, und
wobei das vorstehende Element (52) auf oder benachbart zu einer geraden Linie (DL) positioniert ist, die die erste Lichtquelle (51a) und die vierte Lichtquelle (51d) verbindet.

5. Anzeigevorrichtung (1) nach Anspruch 4, wobei sich das vorstehende Element (52) an einem Mittelpunkt der geraden Linie (DL) befindet.

6. Anzeigevorrichtung (1) nach Anspruch 4, wobei ein Abstand zwischen der ersten Lichtquelle (51a) und dem vorstehenden Element (52) größer ist als ein Abstand von der ersten Lichtquelle (51a) zu einem Mittelpunkt zwischen der ersten Lichtquelle (51a) und der dritten Lichtquelle (51d).

7. Anzeigevorrichtung (1) nach einem der Ansprüche 1 bis 6, wobei das vorstehende Element (52) eine Vielzahl von vorstehenden Elementen (52) umfasst, die abwechselnd mit den Reihen der Lichtquellen (51) positioniert sind, während sie abwechselnd mit den Spalten der Lichtquellen (51) positioniert sind.

8. Anzeigevorrichtung (1) nach einem der Ansprüche 1 bis 7, ferner umfassend:
eine reflektierende Folie (60), die die Vorderfläche des Substrats (40) bedeckt und Löcher (601) aufweist, an denen die Lichtquellen (51) positioniert sind; und
einen Verbinder (55), der auf der Vorderfläche des Substrats (40) positioniert, zwischen den Lichtquellen (51) angeordnet und von der reflektierenden Folie (60) bedeckt ist.

9. Anzeigevorrichtung (1) nach Anspruch 8, wobei in Bezug auf die Vorderfläche des Substrats (40) eine Vorsprungshöhe des vorstehenden Elements (52) größer als eine Vorsprungshöhe des Verbinders (55) ist, und
wobei mindestens zwei Spalten der Lichtquellen zwischen dem Verbinder (55) und dem vorstehenden Element (52) positioniert sind.

10. Anzeigevorrichtung (1) nach Anspruch 8 oder 9, wobei in Bezug auf die Vorderfläche des Substrats (40) eine Vorsprungshöhe des vorstehenden Elements (52) größer als eine Vorsprungshöhe des Verbinders (55) ist,
wobei das vorstehende Element (52) eine Vielzahl von vorstehenden Elementen (52) umfasst,
wobei das Substrat (40) umfasst:
einen ersten Bereich (AR1); und
einen zweiten Bereich (AR2), in dem der Verbinder (55) positioniert ist, und
wobei eine Dichte der vorstehenden Elemente (52) im ersten Bereich (AR1) relativ höher ist als im zweiten Bereich (AR2).

11. Anzeigevorrichtung (1) nach einem der Ansprüche 1 bis 10, wobei das vorstehende Element (52) einen Querschnitt von rechteckiger Form aufweist, und
wobei die Schnittlinie (602) einen ersten Teil (602a) umfasst, der parallel zu einer Längsachse des vorstehenden Elements (52) ist und der eine Länge aufweist, die größer als eine Länge des vorstehenden Elements (52) ist.

12. Anzeigevorrichtung (1) nach einem der Ansprüche 1 bis 11, wobei die Schnittlinie (602) einen zweiten Teil (602b) umfasst, der die Längsachse des vorstehenden Elements (52) schneidet und der eine Länge aufweist, die größer als eine Breite des vorstehenden Elements (52) ist.

## Revendications

1. Dispositif d'affichage (1) comprenant :
un panneau d'affichage (10) ;
un cadre (80) positionné derrière le panneau d'affichage (10) ;
un substrat (40) positionné entre le panneau d'affichage (10) et le cadre (80), et couplé au cadre (80) ;
une pluralité de sources lumineuses (51) agencées sur une surface avant du substrat (40) ;
un élément saillant (52) positionné sur la surface avant du substrat (40), et faisant saillie à partir de la surface avant du substrat (40) vers le panneau d'affichage (10), et
une feuille réfléchissante (60) recouvrant la surface avant du substrat (40) et l'élément saillant (52), et comportant une pluralité de trous (601) dans lesquels la pluralité de sources lumineuses (51) est positionnée,
dans lequel l'élément saillant (52) est positionné en alternance avec des rangées et des colonnes des sources lumineuses (51),
**caractérisé en ce que** la feuille réfléchissante (60) comprend une ligne de découpe (602) formée dans une portion de la feuille réfléchissante (60) qui recouvre l'élément saillant (52).

2. Dispositif d'affichage (1) selon la revendication 1, dans lequel le substrat (40) est une carte de circuit imprimé simple face.

3. Dispositif d'affichage (1) selon la revendication 1 ou 2, dans lequel l'élément saillant (52) est une diode Zener.

4. Dispositif d'affichage (1) selon l'une quelconque des revendications 1 à 3, dans lequel la pluralité de sources lumineuses (51) comprend :
une première source lumineuse (51a) positionnée dans une première colonne (C1) d'une première rangée (R1) ;
une deuxième source lumineuse (51b) positionnée dans une deuxième colonne (C2) de la première rangée (R1) ;
une troisième source lumineuse (51c) positionnée dans la première colonne (C1) d'une deuxième rangée (R2) ; et
une quatrième source lumineuse (51d) positionnée dans la deuxième colonne (C2) de la deuxième rangée (R2), et
dans lequel l'élément saillant (52) est positionné sur une ligne droite (DL) qui relie la première source lumineuse (51a) et la quatrième source lumineuse (51d), ou de manière adjacente à cette ligne droite.

5. Dispositif d'affichage (1) selon la revendication 4, dans lequel l'élément saillant (52) est situé au niveau d'un centre de la ligne droite (DL).

6. Dispositif d'affichage (1) selon la revendication 4, dans lequel une distance entre la première source lumineuse (51a) et l'élément saillant (52) est supérieure à une distance de la première source lumineuse (51a) à un centre situé entre la première source lumineuse (51a) et la troisième source lumineuse (51d).

7. Dispositif d'affichage (1) selon l'une quelconque des revendications 1 à 6, dans lequel l'élément saillant (52) comprend une pluralité d'éléments saillants (52) qui sont positionnés en alternance avec les rangées des sources lumineuses (51), tout en étant positionnés en alternance avec les colonnes des sources lumineuses (51).

8. Dispositif d'affichage (1) selon l'une quelconque des revendications 1 à 7, comprenant en outre :
une feuille réfléchissante (60) recouvrant la surface avant du substrat (40) et comportant des trous (601) au niveau desquels les sources lumineuses (51) sont positionnées ; et
un connecteur (55) positionné sur la surface avant du substrat (40), disposé entre les sources lumineuses (51), et recouvert par la feuille réfléchissante (60).

9. Dispositif d'affichage (1) selon la revendication 8, dans lequel, par rapport à la surface avant du substrat (40), une hauteur de saillie de l'élément saillant (52) est supérieure à une hauteur de saillie du connecteur (55), et
dans lequel au moins deux colonnes des sources lumineuses sont positionnées entre le connecteur (55) et l'élément saillant (52).

10. Dispositif d'affichage (1) selon la revendication 8 ou 9, dans lequel, par rapport à la surface avant du substrat (40), une hauteur de saillie de l'élément saillant (52) est supérieure à une hauteur de saillie du connecteur (55),
dans lequel l'élément saillant (52) comprend une pluralité d'éléments saillants (52),
dans lequel le substrat (40) comprend :
une première zone (AR1) ; et
une deuxième zone (AR2) au niveau de laquelle le connecteur (55) est positionné, et
dans lequel une densité des éléments saillants (52) est relativement plus élevée dans la première zone (AR1) que dans la deuxième zone (AR2).

11. Dispositif d'affichage (1) selon l'une quelconque des revendications 1 à 10, dans lequel l'élément saillant (52) a une section transversale de forme rectangulaire, et
dans lequel la ligne de découpe (602) comprend une première partie (602a) qui est parallèle à un axe longitudinal de l'élément saillant (52) et qui a une longueur supérieure à une longueur de l'élément saillant (52).

12. Dispositif d'affichage (1) selon l'une quelconque des revendications 1 à 11, dans lequel la ligne de découpe (602) comprend une deuxième partie (602b) qui coupe l'axe longitudinal de l'élément saillant (52) et qui a une longueur supérieure à une largeur de l'élément saillant (52).
